# EUROPEAN PATENT SPECIFICATION

(11) **EP 4 354 959 B1**
(45) Date of publication and mention of the grant of the patent: **12.02.2025**
(21) Application number: 23208129.9
(22) Date of filing: 12.08.2013
(51) Int. Cl.: H04W 48/08, H04W 36/00

(54) **HANDOVER CONTROL METHOD AND APPARATUS**
VERFAHREN UND VORRICHTUNG ZUR ÜBERGABESTEUERUNG
PROCÉDÉ ET APPAREIL DE COMMANDE DE TRANSFERT

(30) Priority: 10.08.2012 CN 201210284366
(43) Date of publication of application: 17.04.2024
(62) Divisional of application: 21176781.9
(73) Proprietor: Honor Device Co., Ltd., Shenzhen, Guangdong 518040 (CN)
(72) Inventor: ZHANG, Liangliang, Shenzhen, 518040 (CN); ZHANG, Tao, Shenzhen, 518040 (CN); LIN, Bo, Shenzhen, 518040 (CN); LI, Yajuan, Shenzhen, 518040 (CN)
(74) Representative: Beder, Jens

(56) References cited:
- WO-A1-02/065796
- WO-A1-2011/137784
- US-A1- 2012 182 912
- US-A1- 2014 004 863
- CATT: "Introduce a SRB-Only PS HO method", 3GPP DRAFT; S2-102596, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 5 May 2010 (2010-05-05), XP050434782
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.2.0, 27 June 2012 (2012-06-27), pages 1 - 201, XP050581140

## Description

### TECHNICAL FIELD

The present invention relates to the field of communication technologies and, in particular, to a handover control method and apparatus.

### BACKGROUND

Under heterogeneous networks, in a network covered by a macro base station (Macro eNodeB), there is a plurality of small cellular base stations, which perform wired communication or wireless communication with the macro base station. When a terminal moves in the network covered by the macro base station, inevitably, the terminal needs to change a control plane unceasingly, resulting in handovers.

Currently, an existing handover method includes: transmitting, by a UE, a measurement report to a source eNodeB; making, by the source eNodeB, a handover decision based on the measurement report and other information, and selecting a target cell for the UE; transmitting, by the source eNodeB, a handover request message to a target eNodeB, so that the target eNodeB performs an admission control after receiving the handover request message; then, transmitting, by the target eNodeB, a handover acknowledge message to the source eNodeB, if the target eNodeB agrees with a handover of the serving eNodeB for the terminal; the handover request message including configuration information of the target cell; transmitting, by the source eNodeB, a handover command message to the UE; transmitting, by the source eNodeB, an SN status transfer message to the target base station to inform the target base station of uplink PDCP SN reception status (uplink PDCP SN receiver status) of the UE and downlink packet data convergence protocol PDCP sequence number transmission status (PDCP SN, the downlink PDCP SN transmitter status) of the UE, so that the target eNodeB knows data transfer status of the current UE; then, transmitting, by the UE, a random access preamble to the target eNodeB, after the handover command message is received; transmitting, by the target eNodeB, a random access response message to the UE; transmitting, by the UE, a handover complete message to the target eNB; subsequently, performing, by the target eNodeB, a path selection procedure, i.e. acquiring path information from a gateway via a mobility management entity (MME), since the gateway do not know that the control plane has been switched, the gateway will transmit the path information to the source eNodeB and the target eNodeB via the MME generally.

In a current implementation, when a UE moves in the network covered by the macro base station, the control plane needs to be changed unceasingly and, thereby resulting in the handover described above, during the handover, data transfer may be interrupted, and thus affecting the usage of a user, therefore, the technical problem that remains to be solved at present lies in communication interruptions caused by frequently switching a control plane by a UE when moving in a macro network.

WO 2011/137784 A1 discloses a method for accessing a base station, including: establishing, by a current macro base station, a control-plane-connection with a user equipment according to an access request of the UE, and allocating a first cell-radio network temporary identity (C-RNTI) to the user equipment; and when receiving a measurement report of micro base stations reported by the user equipment, selecting a micro base station for the user equipment according to a preset strategy so that the user equipment establishes a data-plane-connection with the micro base station, and notifying context information of the user equipment to the micro base station, wherein the context information includes the first C-RNTI allocated to the user equipment.

### SUMMARY

Embodiments of the present invention provide a handover control method and apparatus, so as to solve the technical problem of communication interruptions caused by frequently switching a control plane by a UE when moving in a macro network.

The invention is defined in the independent claims. Advantageous features are defined in the dependent claims. In the following, parts of the description and drawings referring to embodiments which are not covered by the claims are not presented as embodiments of the invention, but as examples useful for understanding the invention.

It can be known from the above technical solutions that, a source base station transmits indication to a target base station, so that the target base station, after acquiring the indication, does not reserve resources used for data scheduling for a handover of the UE, or release resources used for data scheduling which are reserved for a handover of the UE. Therefore, in a case where a user plane remains unchanged and a control plane is switched, a normal communication is ensured for the UE.

### BRIEF DESCRIPTION OF DRAWINGS

In order to make technical solutions in embodiments of the present invention or the prior art more clearly, the accompanying drawings used in the embodiments are briefly described hereunder. Obviously, the described drawings are merely some embodiments of the present invention. For persons skilled in the art, other drawings may also be obtained based on these drawings without any inventive efforts.
FIG 1 is a flow chart of a handover control method according to an embodiment of the present invention;
FIG 2 is a second flow chart of a handover control method according to an embodiment of the present invention;
FIG 3 is a third flow chart of a handover control method according to an embodiment of the present invention;
FIG 4 is a first flow chart of a resource control method according to an embodiment of the present invention;
FIG 5 is a second flow chart of a resource control method according to an embodiment of the present invention;
FIG 6 is a first schematic structural diagram of a handover control apparatus according to an embodiment of the present invention;
FIG 7 is a second schematic structural diagram of a handover control apparatus according to an embodiment of the present invention;
FIG 8 is a third schematic structural diagram of a handover control apparatus according to an embodiment of the present invention;
FIG 9 is a first schematic structural diagram of a resource control apparatus according to an embodiment of the present invention;
FIG 10 is a second schematic structural diagram of a resource control apparatus according to an embodiment of the present invention;
FIG. 11 is a flowchart of a first application example of a handover control method according to the present invention;
FIG. 12 is a flowchart of a second application example of a handover control method according to the present invention;
FIG. 13 is a flowchart of a third application example of a handover control method according to the present invention.

### DESCRIPTION OF EMBODIMENTS

Technical solutions in embodiments of the present invention are hereinafter described clearly and completely with reference to accompanying drawings in embodiments of the present invention. Obviously, the described embodiments are only a part of embodiments of the present invention, rather than all embodiments of the present invention. All the other embodiments obtained by persons of ordinary skill in the art based on embodiments of the present invention without any inventive efforts shall fall within the protection scope of the present invention.

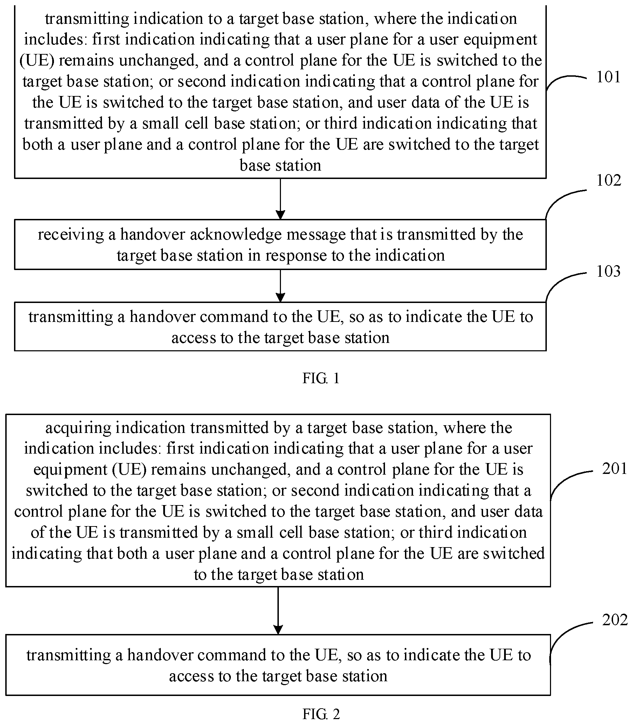

Reference may be made to FIG 1 which is a flow chart of a handover control method according to an embodiment of the present invention; the method includes:
Step 101, transmitting indication to a target base station, where the indication includes: first indication indicating that a user plane (User Plane) of a user equipment (UE) remains unchanged, and a control plane (Control Plane) of the UE is switched to the target base station; or second indication indicating that a control plane for the UE is switched to the target base station, and user data of the UE is transmitted by a small cell base station; or third indication indicating that both a user plane and a control plane for the UE are switched to the target base station;

In this embodiment, there is a plurality of ways for a source base station to transmit the indication to a target base station, any message capable of carrying the indication is fine, two implementations are taken as examples in the following, which is not limited thereto, specifically including:

One way is that: a source base station may transmit indication to the target base station via a handover request message, i.e. the indication is carried in the handover request message; the indication includes the first indication, the second indication or the third indication;

Another way is a negotiation way that: before transmitting the indication to the target base station,
A) the source base station transmits the indication to the target base station via a single message, to indicate that the terminal handover is that a user plane remains unchanged and a control plane is switched; or to indicate that there is a control plane handover and all user data of the UE is transmitted by a small cell base station; or,
B) the source base station may negotiate with the target base station through the negotiation way about whether to agree the indication indicating that the user plane remains unchanged and the control plane is switched; or, about whether to agree the indication indicating that the control plane is switched and all user data of the UE is transmitted by a small cell base station. Specifically, a plurality of messages are used, for example, the source base station transmits the indication to the target base station via a request message, and receives a response message (the response message may indicate agreed, and may also indicate disagreed) fed back by the target base station, and so on. Regarding A and B (an agreed situation), subsequently, when a base station initiates a handover procedure for a terminal, i.e. transmits a handover request message to a target base station, then the target base station will learn the indication indicating that a handover of the terminal (all terminals or a terminal) belonging to the base station is that the user plane remains unchanged and the control plane is switched; or, indicating that the control plane is switched and all user data of the UE is transmitted by the small cell base station.

These ways enable the target base station to know that the user plane remains unchanged and the control plane is switched or know that the control plane is switched and all user data of the UE is transmitted by the small cell base station, and it is no need to reserve a resource used for data scheduling for a handover of the UE.

Step 102, receiving a handover acknowledge message that is transmitted by the target base station in response to the indication;
Where, the source base station, when receiving the handover acknowledge message transmitted by the target base station, has known that the target base station will not reserve a resource used for data scheduling for a handover of the UE, and then may initiate Step 103;
Step 103, transmitting a handover command to the UE, so as to indicate the UE to access to the target base station.

In this step, after the source base station transmits the handover command to the UE, the UE initiates a random access to the target base station, and accesses to the target base station.

In embodiments of the present invention, a source base station notifies a target base station of indication indicating that a user plane remains unchanged and a control plane is switched; or indication indicating that a control plane is switched and all user data of a UE is transmitted by a small cell base station, so that the target base station, after acquiring the indication, does not reserve a resource used for data scheduling for a handover of the UE. Therefore, in a case where a user plane remains unchanged and a control plane is switched, a normal communication is ensured for the UE during a handover. Or, in a case where both a user plane and a control plane are switched, a normal communication is ensured for the UE.

Alternatively, in the embodiments, before transmitting the indication to the target base station, the method may further include: receiving a measurement report transmitted by a user equipment UE; selecting a target base station for the UE according to the measurement report; where, the measurement report may include: a measurement result of a cell covered by a small cell base station and/or measurement results of a cell covered by a candidate for target base station of handover, and so on. Specifically, the measurement result include {a cell identity of a small cell base station, a measurement result} and/or {a cell identity under a base station, a measurement result} respectively;
Alternatively, in this embodiment, a value of the indication may be set to 1 or 0 or 2, certainly, may also be set to other values, for example, 11, 00 or 01, or 10. As long as values set for the first indication, the second indication and the third indication in the indication are different from each other, it will be fine. This embodiment will not make a limitation.

Alternatively, in order to facilitate the target base station to know in which base station user data of the UE is transmitted, the handover request message may also include: an identity of a small cell base station, or a cell identity of a small cell base station.

Alternatively, the handover request message also includes: an identity of a small cell base station, or a cell identity of a small cell base station; or, also includes indication indicating that the control plane for the UE is separated from the user plane.

Alternatively, when or after receiving the handover acknowledge message transmitted by the target base station, the method may also include: transmitting information to the small cell base station for stopping transmitting data to the UE; and after the UE accesses to the target base station, transmitting, by a source base station or the target base station information to the small cell base station for continuing transmitting data to the UE. In this embodiment, the transmitted data may be encrypted using the original key, and the transmitted data may also be encrypted using an acquired new key. This embodiment will not make a limitation.

A process for acquiring the new key is: after the UE accesses to the target base station, and before transmitting the information to the small cell base station for continuing transmitting data to the UE, the method may also include: acquiring a new next hop key (NH, Next HOP key) and a next hop chaining counter (NCC, Next Hop Chaining Counter), and generating a new access stratus (AS, Access Stratum) key according to the NH; and transmitting the new AS key, the NCC and an evolved universal terrestrial radio access network radio access bearer identity (E-RAB ID, E-UTRAN Radio Access Bearer) to the small cell base station.

The acquiring the NH and the NCC specifically includes: receiving the NH and the NCC transmitted by the target base station; or, initiatively acquiring the NH and the NCC from the target base station; where, the NH and the NCC are acquired by the target base station from an MME during a path selection.

In embodiments of the present invention, a source base station may transmit indication to a target base station via a single message, may also notify the target base station of the indication via a plurality of messages (through negotiations), may also transmit an indication message (a single message, a plurality of messages/a negotiation way, etc.) to the target base station before the UE switches, and may also transmit an indication message to the target base station during a switching procedure of the UE (e.g., transmit the indication in a handover request message.), hence, the target base station, after acquiring the indication, may not reserve a resource used for data scheduling for a handover of the UE; thus, in a case where a user plane remains unchanged and a control plane is switched, a normal communication is ensured for the UE and user satisfaction is improved.

Furthermore, in embodiments of the present invention, the source base station may also transmit information to the small cell base station for stopping transmitting data to the UE; and after the UE accesses to the target base station, the source base station or the target base station transmits information to the small cell base station for continuing transmitting data to the UE. The information for continuing transmitting data to the UE may use the original key to encrypt the data, and may also acquire a new key and use the new key to encrypt the data, so as to ensure security of the data transfer.

Reference may also be made to FIG 2 which is a second flow chart of a handover control method according to an embodiment of the present invention, the method includes:
Step 201, acquiring indication transmitted by a target base station, where the indication includes: first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station;
Where, an acquiring method specifically includes:
   One case is that: a source base station receives a handover acknowledge message transmitted by the target base station in response to a handover request message of the source base station, the handover acknowledge message includes the indication; that is to say, a source base station receives a handover acknowledge message transmitted by the target base station, where the handover acknowledge message includes: first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station; or,
   Another case is that: a source base station initiatively acquire the indication from the target base station, that is to say, the source base station initiatively transmits to the target base station first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station.

Certainly, in this embodiment, the first indication, the second indication or the third indication may also be acquired through negotiations, reference may be made to the above embodiments for details of a specific negotiation procedure, which will not be repeated herein.

Step 202, transmitting a handover command to the UE, so as to indicate the UE to access to the target base station.

In embodiments of the present invention, after receiving or acquiring first indication or second indication or third indication from the target base station, the source base station can know that the target base station does not reserve a resource used for data scheduling for a handover of the UE according to the first indication or the second indication or the third indication; and then, transmit the handover command to the UE, so as to indicate the UE to access to the target base station, thereby ensuring that in a case where the user plane remains unchanged and the control plane is switched, a normal communication is ensured for the UE during its handover procedure.

Alternatively, before step 201, the method may also include: receiving a measurement report transmitted by a user equipment (UE); selecting a target base station for the UE according to the measurement report; acquiring configuration information of the target base station from the target base station.

Alternatively, in this embodiment, values set for the first indication, the second indication and the third indication are different from each other, for example, a value of the first indication may be set to 1, a value of the second indication may be set to 0, and a value of the third indication can be set to 2; certainly, they are not limited thereto, and may also be set to other values, for example, 100, 110 or 001, etc.

Alternatively, in order to facilitate the target base station to know in which base station user data of the UE is transmitted, before acquiring the indication transmitted by the target base station, the method further includes: transmitting a handover request message to the target base station, where the handover request message may include: an identity of a small cell base station, or a cell identity of a small cell base station.

Alternatively, when or after receiving the handover acknowledge message transmitted by the target base station, the method may also include: transmitting, by the source base station, information to the small cell base station for stopping transmitting data to the UE; and after the UE access to the target base station, transmitting, by the source base station or the target base station, information to the small cell base station for continuing transmitting data to the UE.

Alternatively, after the UE accesses to the target base station, and before the source base station (or the target base station) transmits the information to the small cell base station for continuing transmitting data to the UE, the method may also include: acquiring a new NH and an NCC, and generating a new AS key according to the NH; and transmitting the new AS key, the NCC and an E-RAB ID to the small cell base station.

The acquiring the new NH and the NCC specifically includes: receiving the NH and the NCC transmitted by the target base station; or, initiatively acquiring the NH and the NCC from the target base station; where, the NH and the NCC are acquired by the target base station from an MME during a path selection.

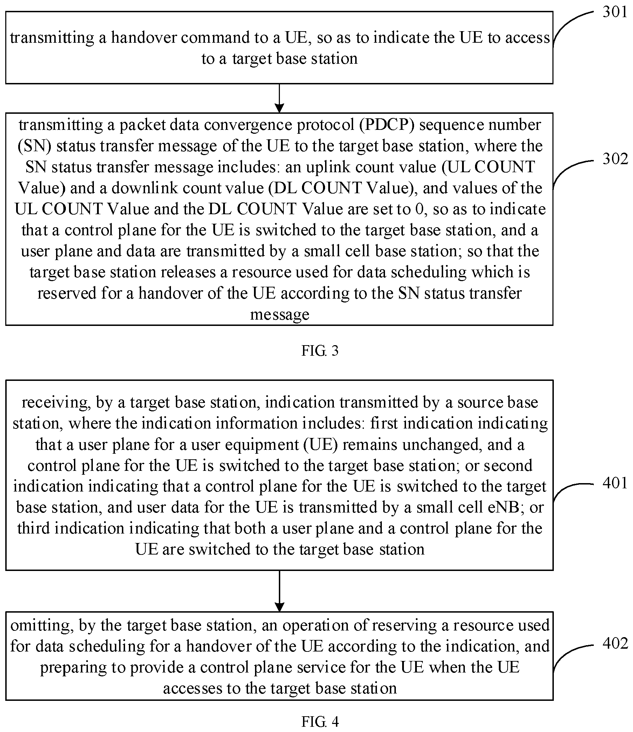

Reference may also be made to FIG 3 which is a third flow chart of a handover control method according to an embodiment of the present invention, the method includes:
Step 301, transmitting a handover command to a UE, so as to indicate the UE to access to a target base station; and
Step 302, transmitting a packet data convergence protocol (PDCP) sequence number (SN) status transfer message of the UE to the target base station, where the SN status transfer message includes: an uplink count value (UL COUNT Value) and a downlink count value (DL COUNT Value), and values of the UL COUNT Value and the DL COUNT Value are set to 0, so as to indicate that a control plane for the UE is switched to the target base station, and a user plane and data are transmitted by a small cell base station; so that the target base station releases a resource used for data scheduling which is reserved for a handover of the UE according to the SN status transfer message.

Alternatively, before step 301, the method may also include: receiving a measurement report transmitted by a user equipment (UE); selecting a target base station for the UE according to the measurement report; transmitting a handover request to the target base station; acquiring configuration information of the target base station from the target base station.

Alternatively, the handover request message may include: an identity of a small cell base station or a cell identity of a small cell base station, but is not limited thereto.

Alternatively, when or after receiving the handover acknowledge message transmitted by the target base station, the method may also include: transmitting, by the source base station, information to the small cell base station for stopping transmitting data to the UE;
Alternatively, the method may also include: after the UE accesses to the target base station, transmitting, by the source base station or the target base station, information to the small cell base station for continuing transmitting data to the UE.

Alternatively, after the UE accesses to the target base station and before the source base station or the target base station transmits the information to the small cell base station for continuing transmitting data to the UE, the method may also include: acquiring a new NH and an NCC, and generating a new AS key according to the NH; and transmitting the new AS key, the NCC and an E-RAB ID to the small cell base station. The acquiring the new NH and the NCC specifically includes:
Receiving, by the source base station, the NH and the NCC transmitted by the target base station; or, acquiring, by the source base station, the NH and the NCC from the target base station initiatively; where, the NH and the NCC are acquired by the target base station from an MME during a path selection.

Reference may also be made to FIG. 4 which is a first flow chart of a resource control method according to an embodiment of the present invention, the method includes:
Step 401, receiving, by a target base station, indication transmitted by a source base station, where the indication includes: first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station; and
Step 402, omitting, by the target base station, an operation of reserving a resource used for data scheduling for a handover of the UE according to the indication, and preparing to provide a control plane service for the UE when the UE accesses to the target base station.

In embodiments of the present invention, the target base station, after receiving the indication transmitted by the source base station, will not reserve resources used for data scheduling for a handover of the UE, thereby ensuring a normal communication for the UE during its handover procedure.

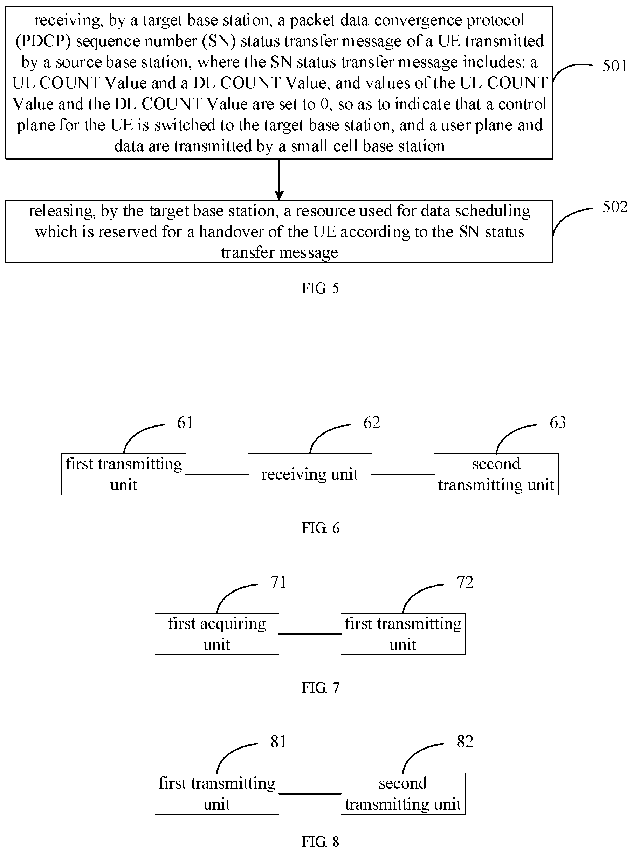

Reference may also be made to FIG. 5 which is a second flow chart of a resource control method according to an embodiment of the present invention, the method includes:
Step 501, receiving, by a target base station, a packet data convergence protocol (PDCP) sequence number (SN) status transfer message of a UE transmitted by a source base station, where the SN status transfer message includes: a UL COUNT Value and a DL COUNT Value, and values of the UL COUNT Value and the DL COUNT Value are set to 0, so as to indicate that a control plane for the UE is switched to the target base station, and a user plane and data are transmitted by a small cell base station; and
Step 502, releasing, by the target base station, a resource used for data scheduling which is reserved for a handover of the UE according to the SN status transfer message.

In embodiments of the present invention, the target base station, after receiving the SN status transfer message carrying the indication, will release the resources used for data scheduling which are reserved for a handover of the UE, thereby ensuring that in a case where the user plane remains unchanged and the control plane is switched, a normal communication is ensured for the UE during its handover procedure.

Based on implementation procedures of the methods above, embodiments of the present invention also provide a handover control apparatus, and its first schematic structural diagram is as shown in FIG. 6, the apparatus includes: a first transmitting unit 61, a receiving unit 62 and a second transmitting unit 63. The first transmitting unit 61 is configured to transmit indication to a target base station, where the indication includes: first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station; the receiving unit 62 is configured to receive a handover acknowledge message that is transmitted by the target base station in response to the indication; and the second transmitting unit 63 is configured to transmit a handover command to the UE, so as to indicate the UE to access to the target base station.

The apparatus may be a processor, where each internal unit may be implemented by a logic integrated circuit, and the processor is integrated in an eNodeB.

The first transmitting unit includes: a first indication transmitting unit and/or a first indication transmitting unit, where the first indication transmitting unit is configured to transmit the indication to the target base station via a handover request message; or, the second indication transmitting unit is configured to acquire the indication by negotiating with the target base station before transmitting the indication to the target base station.

Alternatively, the apparatus may also include: a third transmitting unit and a fourth transmitting unit, where the third transmitting unit is configured to transmit information to the small cell base station for stopping transmitting data to the UE when or after the receiving unit receives the handover acknowledge message transmitted by the target base station; and the fourth transmitting unit is configured to transmit information to the small cell base station for continuing transmitting data to the UE after the third transmitting unit transmits the information for stopping transmitting data to the UE and after the UE accesses to the target base station.

Alternatively, the apparatus may also include: an acquiring unit, a generating unit and a key transmitting unit, where the acquiring unit is configured to acquire a new NH and an NCC after the UE accesses to the target base station and before the fourth transmitting unit transmits the information for continuing transmitting data to the UE; the generating unit is configured to generate a new AS key according to the NH; and the key transmitting unit is configured to transmit the new AS key, the NCC and an E-RAB ID to the small cell base station.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

Reference may also be made to FIG. 7 which is a second schematic structural diagram of a handover control apparatus according to an embodiment of the present invention, the apparatus includes: a first acquiring unit 71 and a first transmitting unit 72, the first acquiring unit 791 is configured to acquire indication transmitted by a target base station, where the indication includes: first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station; and the first transmitting unit 72 is configured to transmit a handover command to the UE, so as to indicate the UE to access to the target base station.

The apparatus may be a processor, where each internal units may be implemented by a logic integrated circuit, and the processor is integrated in an eNodeB.

The first acquiring unit includes: a receiving unit and/or an initiative acquiring unit, the receiving unit is configured to receive a handover acknowledge message transmitted by the target base station in response to the handover request message of the source base station, where the handover acknowledge message includes the indication; the initiative acquiring unit is configured to initiatively acquire the indication from the target base station.

Alternatively, the apparatus may also include: a second transmitting unit and a third transmitting unit, the second transmitting unit is configured to transmit information to the small cell base station for stopping transmitting data to the UE before the first transmitting unit transmits the handover command to the UE; and the third transmitting unit is configured to transmit information to the small cell base station for continuing transmitting data to the UE after the second transmitting unit transmits the information for stopping transmitting data to the UE and after the UE accesses to the target base station.

Alternatively, the apparatus may also include: a second acquiring unit, a generating unit and a key transmitting unit, the second acquiring unit is configured to acquire a new NH and an NCC after the UE accesses to the target base station and before the third transmitting unit transmits the information for continuing transmitting data to the UE; the generating unit is configured to generate a new AS key according to the NH; and the key transmitting unit is configured to transmit the new AS key, the NCC and an E-RAB ID to the small cell base station.

Alternatively, the apparatus may be integrated in a base station, and may also be deployed in a network independently. Embodiments of the present invention will not make a limitation.

The apparatus may be a processor, where each internal unit may be implemented by a logic integrated circuit, and the processor is integrated in an eNodeB.

Reference may be made to corresponding implementation procedures in the methods described above for implementation procedures of functions and roles of all units in the apparatus, which will not be repeated herein.

Reference may also be made to FIG. 8 which is a third schematic structural diagram of a handover control apparatus according to an embodiment of the present invention, the apparatus includes: a first transmitting unit 81 and a second transmitting unit 82, the first transmitting unit 81 is configured to transmit a handover command to a UE, so as to indicate the UE to access to a target base station; and the second transmitting unit 82 is configured to transmit a packet data convergence protocol (PDCP) sequence number (SN) status transfer message of the UE to the target base station, where the SN status transfer message includes: a UL COUNT Value and a DL COUNT Value, and values of the UL COUNT Value and the DL COUNT Value are set to 0, so as to indicate that a control plane for the UE is switched to the target base station, and a user plane and data are transmitted by a small cell base station, so that the target base station releases a resource used for data scheduling which is reserved for a handover of the UE according to the SN status transfer message.

The apparatus may be a processor, where each internal unit may be implemented by a logic integrated circuit, and the processor is integrated in an eNodeB.

Alternatively, the apparatus may also include: a third transmitting unit and a fourth transmitting unit, the third transmitting unit is configured to transmit information to the small cell base station for stopping transmitting data to the UE before the first transmitting unit transmits the handover command to the UE; and the fourth transmitting unit is configured to transmit information to the small cell base station for continuing transmitting data to the UE after the third transmitting unit transmits the information for stopping transmitting data to the UE and after the UE accesses to the target base station.

Alternatively, the apparatus may also include: an acquiring unit, a generating unit and a key transmitting unit, the acquiring unit is configured to acquire a new NH and an NCC after the UE accesses the target base station and before the fourth transmitting unit transmits the information for continuing transmitting data to the UE; the generating unit is configured to generate a new AS key according to the NH; and the key transmitting unit is configured to transmit the new AS key, the NCC and an E-RAB ID to the small cell base station.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

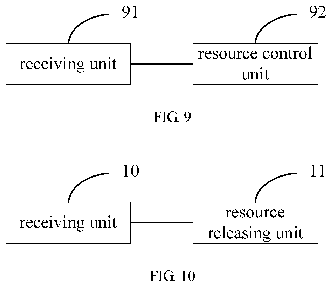

Reference may also be made to FIG 9 which is a first schematic structural diagram of a resource control apparatus according to an embodiment of the present invention, the apparatus includes: a receiving unit 91 and a resource control unit 92, the receiving unit 91 is configured to receive indication transmitted by a source base station, where the indication includes: first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station; and the resource control unit 92 is configured to omit an operation of reserving a resource used for data scheduling for a handover of the UE according to the indication, and prepare to provide a control plane service for the UE when the UE accesses to the target base station;
The apparatus may be a processor, where each internal unit may be implemented by a logic integrated circuit, and the processor is integrated in an eNodeB.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

Reference may also be made to FIG 10 which is a second schematic structural diagram of a resource control apparatus according to an embodiment of the present invention, the apparatus includes: a receiving unit 10 and a resource releasing unit 11, the receiving unit 10 is configured to receive a packet data convergence protocol (PDCP) sequence number (SN) status transfer message of a UE transmitted by a source base station, where the SN status transfer message includes: a UL COUNT Value and a DL COUNT Value, and values of the UL COUNT Value and the DL COUNT Value are set to 0, so as to indicate that a control plane for the UE is switched to the target base station, and a user plane and data are transmitted by a small cell base station; and the resource releasing unit 11 is configured to release a resource used for data scheduling which is reserved for a handover of the UE according to the SN status transfer message, and prepare to provide a control plane service for the UE when the UE accesses to the target base station. The apparatus may be a processor, where each internal unit may be implemented by a logic integrated circuit, and the processor is integrated in an eNodeB.

Alternatively, the apparatus may be integrated in a base station, and may also be deployed in a network independently. Embodiments of the present invention will not make a limitation.

Reference may be made to corresponding implementation procedures in the methods described above for implementation procedures of functions and roles of all units in the apparatus, which will not be repeated herein.

In order to facilitate persons skilled in the art to understood, specific application examples are described hereunder.

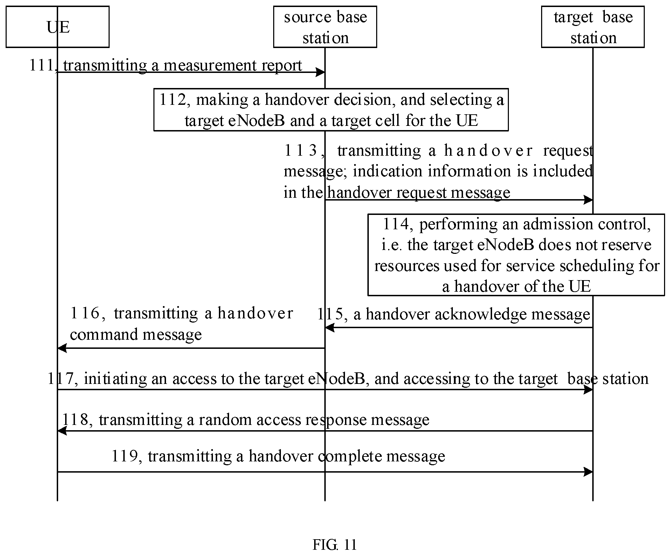

Reference may be made to FIG. 11 which is a flowchart of a first application example of a handover control method according to the present invention; in this embodiment, an example is taken where indication is carried in a request message, but is not limited thereto, the method specifically includes:
Step 111, transmitting, by a UE, a measurement report to a source eNodeB; where the measurement report may include a measurement result of a cell covered by a small cell base station and/or a measurement result of a cell covered by a candidate for target base station of handover, and so on. Specifically, the measurement result include {a cell identity of a small cell base station, a measurement result} and/or {a cell identity under a base station, a measurement result} respectively;
Step 112, making, by the source eNodeB, a handover decision based on the measurement report and other related information, and selecting a target cell for the UE; that is to say, the source base station makes the handover decision for the UE, and selects the target cell of a handover of the UE.
Step 113, transmitting, by the source eNodeB, a handover request message to a site (i.e. a target eNB) corresponding to the target cell; indication is included in the handover request message; where, the indication includes: first indication indicating that a user plane for a user equipment (UE) remains unchanged, and a control plane for the UE is switched to the target eNB; or second indication indicating that a control plane for the UE is switched to the target eNB, and user data of the UE is transmitted by a small cell base station; or third indication indicating that both a user plane and a control plane for the UE are switched to the target eNB;
That is to say, the indication is added in the handover request message, to indicate that the UP remains unchanged and the CP is switched.

Alternatively, it can be indicated by adding 1-bit indication in the handover request message, certainly, a value of the indication may also be set to 1 or 0 to represent the indication indicating that the UP remains unchanged and the CP is switched, or that the CP is switched and all user data of the UE is transmitted by the small cell base station; or represent the third indication indicating that both the user plane and the control plane are switched. Certainly, a value of the indication may also be set to other values, the values can be set arbitrarily according to needs, for example, 11 or 00, etc., and this embodiment will not make a limitation.

Alternatively, the handover request message may also include: an identity of a small cell base station (Pico), and/or a cell identity (Cell ID) of a Pico, and/or include indication indicating that the control plane for the UE is separated from the user plane.

Step 114, performing, by the target eNodeB, an admission control after receiving the handover request message transmitted by the source base station; i.e. the target eNodeB does not reserve a resource used for service scheduling for a handover of the UE.

Step 115, transmitting, by the target eNodeB, a handover acknowledge message to the source eNodeB;
Alternatively, when or after receiving the handover acknowledge message transmitted by the target base station, the source base station or the target base station may transmit a message to the Pico, where the message includes information for stopping transmitting data to the UE; specifically, the information may include an identity of the UE to represent stopping all data transfer related to the UE, or may include information about a data radio bearer (data radio bear, DRB) of the UE transmitted by the Pico. The data radio bearer (data radio bear, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Step 116, transmitting, by the source eNodeB, a handover command message to the UE so as to indicate the UE to initiate a random access to the target base station;
After step 116, the prior art also requires to perform step A: transmitting, by the source eNodeB, an SN status transfer message to the target base station to inform the target base station of uplink PDCPSN reception status (uplink PDCP SN receiver status) and downlink PDCPSN (the downlink PDCP SN transmitter status) of the UE, so that the target base station knows data transfer status of the current UE.

While in this embodiment, after step 116, there is no need to perform step A, this is because, in step 113, the source base station has informed the target base station of the indication via the handover request message, there is no need to switch the UP, the target base station, after receiving the indication, agrees this type of handover and switch the UE to the target cell. Thus, in embodiments of the present invention, the target base station does not need to know data reception situation of the UE, and will be clear about start number of forwarded data.

Step 117, initiating, by the UE, an access to the target eNodeB after receiving the handover command message, and accessing to the target base station;
Where, a procedure for the UE to access to the target eNodeB is: transmitting, by the UE, a random access preamble to the target eNodeB. The specific access procedure is well-known techniques for persons skilled in the art, and will not be repeated herein.

Step 118, transmitting, by the target eNodeB, a random access response message to the UE;
Step 119, transmitting, by the UE, a handover complete message to the target eNB.

Alternatively, if an optional step after step 115 is performed, then after step 119, i.e. after the UE completes the handover, the source/target base station transmits information to the small cell base station (Pico) for continuing transmitting data to the UE; specifically, the information includes: an identifier of the UE which is provided to indicate the service belongs to which terminal, or provided information about a data radio bearer (data radio bear, DRB) of the UE. The data radio bearer (data radio bear, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Certainly, the transmitting the information to the Pico for continuing transmitting data to the UE is not limited to be performed after this step, and may be performed after any one of steps after this step, for example, after step 119 and before the step of requesting a path selection, certainly, the transmitting the information to the Pico for continuing transmitting data to the UE may also be performed after the NCC and the new NH are acquired, this embodiment will not make a limitation.

Alternatively, after the UE accesses to the target base station, and before the information for continuing transmitting data to the UE is transmitted to the small cell base station, the embodiments may include: acquiring, by the target base station, a new NH and an NCC from an MME side, and generating a new AS key according to the NH; and transmitting the new AS key, the NCC and an E-RAB ID to the small cell base station.

That is to say, in a path switch process (path switch process) of the UE, since the UP of the UE remains unchanged at this time, it does not need to notify a gateway to change a data transfer target. However, since this process also includes acquiring a new NH and an NCC at the MME side by the target base station, the target eNB can initiate an intra-cell handover procedure immediately after a handover is completed, and uses the new NH to generate the new AS key. Thus, the small cell base station (Pico) needs to acquire a new NH and an NCC to perform data transfer, which specifically includes:
1) transmitting, by the target base station, a path selection request (Path switch request) message to an mobility management entity (MME, Mobility Management Entity);
   In this step, since the UP plane remains unchanged, a parameter in the request message is: a downlink transport point address (Transport layer address), which is still a transport point address of a Pico providing data transfer for the UE, rather than an address of the target base station;
2) transmitting, by the MME, a modify bearer request message (modify bearer request message) to a serving gateway after receiving the path selection request. This step is an optional step.
3) transmitting, by the serving gateway, a modify bearer response message (modify bearer Response message) to the MME, and confirming a user plane update request. This step is an optional step.
4) transmitting, by the MME, a path selection confirmation message (path switch request ACK) to the target base station after receiving the modify bearer response message.

Although downlink transport point address (Transport layer address) is still the transport point address of the Pico providing data transfer for the UE, the MME also provides a new NCC and a new NH for the target base station.
5) transmitting, by the target base station, a "terminal resource information release" message (i.e. context release message) to the source base station, and notifying the source base station that the handover has been completed.
6) transmitting, by the source base station, a message to the Pico, so as to provide a new NCC and a new NH. Further, in order to identify that the service belongs to which UE, an identifier of the UE also needs to be provided particularly to indicate the service belongs to which terminal, or information about a data radio bearer (data radio bear, DRB) of the terminal needs to be provided. The data radio bearer (data radio bear, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Alternatively, parallel to 5), or after 5), the method may also include: transmitting, by the target eNodeB, a message to the Pico to provide a new NCC and a new NH; furthermore, in order to identify that the service belongs to which UE, an E-RAB ID also needs to be provided particularly.

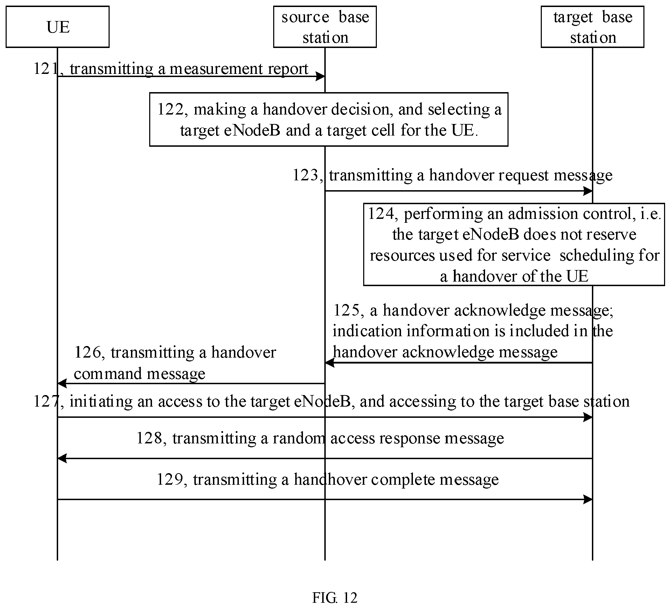

Reference may also be made to FIG. 12 which is a flowchart of a second application example of a handover control method according to the present invention; in this embodiment, an example is taken where indication indicating that a UE remains unchanged and a CP is switched is carried in a handover acknowledge message transmitted by a target base station to a source base station, but is not limited thereto, the method specifically includes:
Step 121, transmitting, by a UE, a measurement report to a source eNodeB; where, reference may be made to the embodiments described above for contents of the measurement report, which will not be repeated herein;
Step 122, making, by the source eNodeB, a handover decision based on the measurement report and other related information, and selecting a target cell for the UE.
Step 123, transmitting, by the source eNodeB, a handover request message to a site (i.e. a target eNB) corresponding to the target cell;
Alternatively, the handover request message may also include: an identity of a small cell base station (Pico), or a cell identity (Cell ID) of the Pico, or also include one or more of indication indicating that the control plane for the UE is separated from the user plane.
Step 124, performing, by the target eNodeB, an admission control after receiving the handover request message transmitted by the source base station;
Step 125, transmitting, by the target eNodeB, a handover acknowledge message to the source eNodeB; where the handover acknowledge message includes indication, where, the indication includes: first indication indicating that a user plane for a user equipment (UE) remains unchanged, and a control plane for the UE is switched to the target base station; or second indication indicating that a control plane for the UE is switched to the target base station, and user data of the UE is transmitted by a small cell base station; or third indication indicating that both a user plane and a control plane for the UE are switched to the target base station.

That is to say, the indication is added in the handover request message to indicate that the UP remains unchanged and the CP is switched.

Alternatively, it can be indicated by adding 1-bit indication in the handover acknowledge message, certainly, a value of the indication may also be set to 1 or 0 to represent the first indication indicating that the UP remains unchanged and the CP is switched, or represent the second indication indicating that the CP is switched and all user data of the UE is transmitted by the small cell base station; or represent the third indication indicating that both the user plane and the control plane are switched. Certainly, a value of the indication may also be set to other values, the values can be set arbitrarily according to needs, for example, 100 or 111, etc., and this embodiment will not make a limitation, as long as values of the three types of indication are set different from each other, it will be fine.

Alternatively, when or after receiving the handover acknowledge message transmitted by the target base station, the source base station or the target base station may transmit a message to the Pico, where the message includes information for stopping transmitting data to the UE; specifically, the information may include an identity of the UE to represent stopping all data transfer related to the UE, or may include information about a data radio bearer (data radio bear, DRB) of the UE transmitted by the Pico. The data radio bearer (data radio bear, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Step 126, transmitting, by the source eNodeB, a handover command message to the UE to indicate the UE to initiate a random access to the target base station;
Step 127, initiating, by the UE, an access to the target eNodeB after receiving the handover command message, and accessing to the target base station;

Reference may be made to the embodiments described above for the access procedure, which will not be repeated herein.

Step 128, transmitting, by the target eNodeB, a random access response message to the UE;
Step 129, transmitting, by the UE, a handover complete message to the target eNodeB.

Alternatively, if an optional step after step 125 is performed, then after step 139, i.e. after the UE completes the handover, the source/target base station transmits information to the small cell base station (Pico) for continuing transmitting data to the UE; specifically, the information includes: an identifier of the UE which is provided to indicate the service belongs to which terminal, or provided information about a data radio bearer (data radio bear, DRB) of the UE. The data radio bearer (data radio bear, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Certainly, the transmitting the information for continuing transmitting data to the UE is not limited to be performed after this step, and may be performed after any one of steps after this step, for example, after step 129 and before the step of requesting a path selection, certainly, the transmitting the information to the Pico for continuing transmitting data to the UE may also be performed after the NCC and the new NH are acquired, this embodiment will not make a limitation.

Reference may be made to the procedures as described in FIG 11 for subsequent procedures of this embodiment, which will not be repeated herein.

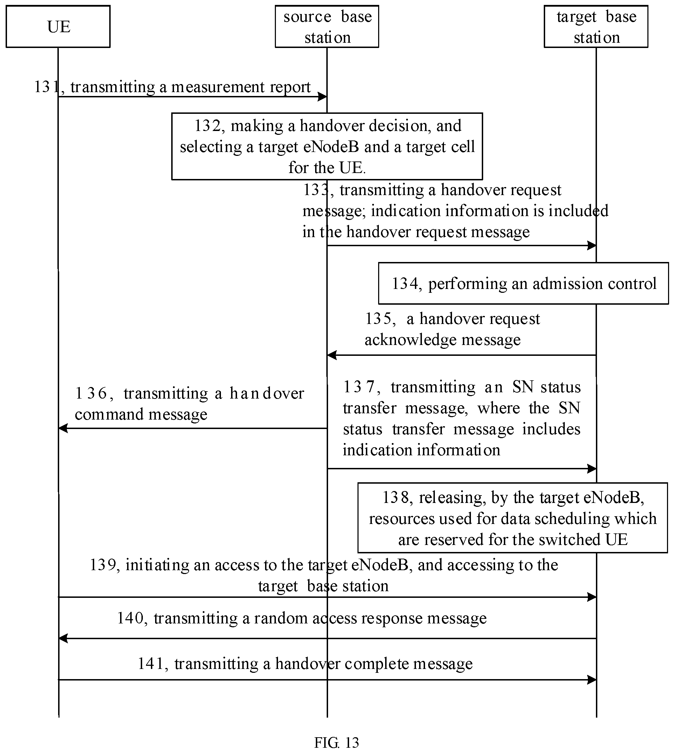

Reference may also be made to FIG. 13 which is a flowchart of a third application example of a handover control method according to the present invention; in this embodiment, an example is taken where indication indicating that a UE remains unchanged and a CP is switched is carried in a packet data convergence protocol (PDCP) sequence number (SN) status transfer message of the UE transmitted by a source eNodeB to a target eNodeB, but is not limited thereto, the method specifically includes:
Step 131, transmitting, by a UE, a measurement report to a source eNodeB; where, reference may be made to the descriptions above for contents of the measurement report, which will not be repeated herein;
Step 132, making, by the source eNodeB, a handover decision based on the measurement report and other related information, and selecting a target cell for the UE.
Step 133, transmitting, by the source eNodeB, a handover request message to a site (i.e. a target eNB) corresponding to the target cell;

Alternatively, the handover request message may also include: an identity of a small cell base station (Pico) and a cell identity (Cell ID) of the Pico, or a cell identity (Cell ID) of Pico, or also include one or more of indication indicating that the control plane for the UE is separated from the user plane.
Step 134, performing, by the target eNodeB, an admission control after receiving the handover request message transmitted by the source base station;
Step 135, transmitting, by the target eNodeB, a handover acknowledge message to the source eNodeB;
Alternatively, when or after receiving the handover acknowledge message transmitted by the target base station, the source base station or the target base station may transmit a message to the Pico, where the message includes information for stopping transmitting data to the UE; specifically, the information may include an identity of the UE to represent stopping all data transfer related to the UE, or may include information about a data radio bearer (data radio bear, DRB) of the UE transmitted by the Pico. The data radio bearer (data radio bear, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).
Step 136, transmitting, by the source eNodeB, a handover command message to the UE to indicate the UE to initiate a random access to the target base station;
Step 137, transmitting, by the source eNodeB, a packet data convergence protocol (PDCP) sequence number (SN) status transfer (SN status transfer) message of the UE to the target base station, where the SN status transfer message includes indication, where the indication includes an UL COUNT Value and a DL COUNT Value, and values of the UL COUNT Value and the DL COUNT Value are set to 0, so as to indicate that a control plane for the UE is switched to the target eNodeB, and a user plane and data are transmitted by a small cell base station. Certainly, in this embodiment, values of the UL COUNT Value and the DL COUNT Value may also be set to other values, this embodiment will not make a limitation.

A COUNT Value is:
This information element indicates the 12 bit PDCP sequence number and the corresponding 20 bit Hyper frame number.

| IE/Group Name | Presence | Range | IE type and reference | Semantics description | Criticality | Assigned Criticality |
|---|---|---|---|---|---|---|
| PDCP-SN | M | | INTEGER (0..4095) | | - | - |
| HFN | M | | INTEGER | | - | - |
| | | | (0..1048575) | | | |

Step 138, receiving, by the target base station, the SN status transfer message of the source base station, since indication is carried in the message, then, releasing, by the target base station, a resource used for data scheduling which is reserved for the switched UE.

Step 139, after step 136, i.e. after receiving the handover command message, initiating, by the UE, an access to the target eNodeB, and accessing to the target base station.

Reference may be made to the embodiments described above for the access procedure, which will not be repeated herein.

Step 140, transmitting, by the target eNodeB, a random access response message to the UE;
Step 141, transmitting, by the UE, a handover complete message to the target eNB.

Alternatively, if an optional step after step 135 is performed, then after step 141, i.e. after the UE completes the handover, the source/target base station transmits information to the small cell base station (Pico) for continuing transmitting data to the UE; specifically, the information includes: an identifier of the UE which is provided to indicate the service belongs to which terminal, or provided information about a data radio bearer (data radio bear, DRB) of the UE. The data radio bearer (data radio bear, DRB) specifically includes one or more of the following, but is not just limited to: an E-RAB ID (E-UTRAN Radio Access Bearer ID, an E-UTRAN Radio Access Bearer ID), a Transport Layer Address (Transport Layer Address), a GTP-TEID (GTP Tunneling Protocol -Tunnel Endpoint Identifier, GTP Protocol-Tunnel UE Identifier).

Certainly, the transmitting the information for continuing transmitting data to the UE is not limited to be performed after this step, and may be performed after any one of steps after this step, for example, after step 141 and before the step of requesting a path selection, certainly, the transmitting the information to the Pico for continuing transmitting data to the UE may also be performed after the NCC and the new NH are acquired, this embodiment will not make a limitation.

In embodiments of the present invention, a source base station transmits indication to a target base station, so that the target base station, after acquiring the indication, does not reserve resources used for data scheduling for a handover of the UE, or release resources used for data scheduling which are reserved for a handover of the UE. Therefore, in a case where a user plane remains unchanged and a control plane is switched, a normal communication is ensured for the UE during its handover.

In embodiments of the present invention, a UE may be any one of the following, it may be stationary, and may also be mobile, a stationary UE may specifically include: a terminal (terminal), a mobile station (mobile station), a subscriber unit (subscriber unit), a station (station), or the like; a mobile UE may specifically include: a cellular phone (cellular phone), a personal digital assistant (PDA, personal digital assistant), a wireless modem (modem), a wireless communication device, a handheld (handheld) device, a laptop computer (laptop computer), a cordless phone (cordless phone), a wireless local loop (WLL, wireless local loop) station, or the like, the UEs described above may be distributed through the overall wireless network.

In order to facilitate the understanding of persons skilled in the art, specific application examples are described hereunder. It should be noted that, in this embodiment, a mobility management network element can be any one of an MME (Mobility Management Entity, mobility management entity) and an SGSN (Serving GPRS Support Node, serving GPRS support node). For convenience of descriptions, specific illustrations are made by taking the mobility management network element in the following application examples as the MME.

It should be noted that, in the description herein, the terms like "first" and "second" are used to differentiate one entity or operation from another, but is not necessarily construed as any practical relationship or order between the entities or operations. Moreover, the terms "include", "comprise" and any variation thereof refer to "including but not limited to". Therefore, in the context of a process, method, object or device that includes a series of elements, the process, method, object or device not only includes such elements, but also includes other elements not specified explicitly, or may include inherent elements of the process, method, object or device. Unless otherwise specified, in the context of "include" or "comprise", the process, method, object or device that includes or comprises the specified elements may include other identical elements.

From the above description of the embodiments, it should be readily recognized by persons skilled in the art that: besides implementation of the present invention through software and necessary universal hardware platform, the present invention may also be implemented through hardware, however, in many cases, the former is a preferred embodiment; technical solutions of the present invention in substance or the part contributing to the prior art may be embodied in software products, the computer software products may be stored in a storage medium such as a read-only memory (Read-Only Memory, ROM)/a random access memory (Random Access Memory, RAM), a magnetic disk, or an optical disc, and includes several instructions for instructing a computer device (which may be a personal computer, a server, or a network device) to implement the methods described in all embodiments or some parts of the embodiments of the present invention.

## Claims

1. A handover control method, comprising:
receiving (123), by a target base station, a handover request message from a source base station, wherein the handover request message comprises an identity of a small cell base station or a cell identity of the small cell base station; and
transmitting (125), by the target base station, a handover acknowledge message to the source base station, wherein the handover acknowledge message comprises indication that occupies a bit, a value of the indication being used to represent that user data of an user equipment, UE, continues to be transmitted by the small cell base station after the UE accessing the target base station, wherein the target base station provides a control plane service for the UE.

2. The method according to claim 1, wherein, after the transmitting (125) the handover acknowledge message to the source base station, the method further comprises:
transmitting to the small cell base station information for stopping transmitting data to the UE.

3. The method according to claim 1, wherein, after the UE accesses (127) to the target base station, the method further comprises:
transmitting (128) to the UE a random access response message; and
receiving (129) from the UE a handover complete message.

4. The method according to claim 1, wherein, after the UE accesses (127) to the target base station, the method further comprises:
transmitting to the small cell base station information for continuing transmitting data to the UE.

5. A handover control method, comprising:transmitting (123), by a source base station, a handover request message to a target base station, wherein the handover request message comprises an identity of a small cell base station or a cell identity of the small cell base station; and
receiving (125), by the source base station, a handover acknowledge message from the target base station, wherein the handover acknowledge message comprises indication that occupies a bit, a value of the indication being used to represent that user data of an user equipment, UE, continues to be transmitted by the small cell base station after the UE accessing the target base station, wherein the target base station provides a control plane service for the UE.

6. The method according to claim 5, wherein, when or after receiving (125) the handover acknowledge message transmitted by the target base station, the method further comprises:
transmitting to the small cell base station information for stopping transmitting data to the UE.

7. The method according to claim 5, wherein, after the UE accesses (127) to the target base station, the method further comprises:
transmitting to the small cell base station information for continuing transmitting data to the UE.

8. A program comprising instructions which, when the program is executed by a processor of a target base station, cause the target base station to carry out the steps of any one of claims 1 to 4.

9. A program comprising instructions which, when the program is executed by a processor of a source base station, cause the source base station to carry out the steps of any one of claims 5 to 7.

10. A target base station, wherein the target base station is configured to perform the method according to any one of claims 1 to 4.

11. A source base station, wherein the source base station is configured to perform the method according to any one of claims 5 to 7.

## Patentansprüche

1. Ein Übergabesteuerungsverfahren, umfassend:
Empfangen (123) einer Handover-Anforderungsnachricht von einer Quellbasisstation durch eine Zielbasisstation, wobei die Handover-Anforderungsnachricht eine Identität einer Kleinzellenbasisstation oder eine Zellidentität der Kleinzellenbasisstation umfasst; und
Übermittlung (125) einer Handover-Bestätigungsnachricht durch die Zielbasisstation an die Quellbasisstation, wobei die Handover-Bestätigungsnachricht eine Anzeige umfasst, die ein Bit belegt, wobei der Wert der Anzeige verwendet wird, um darzustellen, dass die Benutzerdaten eines Benutzergeräts (UE) weiterhin von der Small-Cell-Basisstation übertragen werden, nachdem das UE auf die Zielbasisstation zugegriffen hat, wobei die Zielbasisstation einen Steuerungsebenendienst für das UE bereitstellt.

2. Das Verfahren nach Anspruch 1, wobei das Verfahren nach dem Übermitteln (125) der Übergabe-Bestätigungsnachricht an die Quellbasisstation weiterhin umfasst:
Übermittlung von Informationen an die Kleinzellenbasisstation, um die Datenübertragung an die UE zu stoppen.

3. Das Verfahren nach Anspruch 1, wobei das Verfahren nach dem Zugriff des UE (127) auf die Zielbasisstation ferner umfasst:
Übermitteln (128) einer Zufallszugriffsantwortnachricht an die UE; und
Empfangen (129) von der UE eine Übergabe-Abschlussnachricht.

4. Das Verfahren nach Anspruch 1, wobei das Verfahren nach dem Zugriff (127) des UE auf die Zielbasisstation ferner umfasst:
Übermittlung von Informationen an die Kleinzellenbasisstation zur Fortsetzung der Datenübertragung an das UE.

5. Ein Übergabesteuerungsverfahren, umfassend: Übertragen (123) einer Übergabeanforderungsnachricht durch eine Quellbasisstation an eine Zielbasisstation, wobei die Übergabeanforderungsnachricht eine Identität einer Kleinzellenbasisstation oder eine Zellidentität der Kleinzellenbasisstation umfasst; und
Empfangen (125) einer Handover-Bestätigungsnachricht von der Zielbasisstation durch die Quellbasisstation, wobei die Handover-Bestätigungsnachricht eine Anzeige umfasst, die ein Bit belegt, wobei der Wert der Anzeige verwendet wird, um darzustellen, dass die Benutzerdaten eines Benutzergeräts (UE) weiterhin von der Small-Cell-Basisstation übertragen werden, nachdem das UE auf die Zielbasisstation zugegriffen hat, wobei die Zielbasisstation einen Steuerungsebenendienst für das UE bereitstellt.

6. Das Verfahren nach Anspruch 5, wobei das Verfahren ferner umfasst, wenn oder nachdem die vom Zielbasisstation übertragene Übergabe-Bestätigungsnachricht empfangen (125) wird:
Übermittlung von Informationen an die Kleinzellenbasisstation, um die Datenübertragung an die UE zu stoppen.

7. Das Verfahren nach Anspruch 5, wobei das Verfahren nach dem Zugriff (127) des UE auf die Zielbasisstation ferner umfasst:
Übermittlung von Informationen an die Kleinzellenbasisstation zur Fortsetzung der Datenübertragung an das UE.

8. Ein Programm, das Anweisungen umfasst, die, wenn das Programm von einem Prozessor einer Zielbasisstation ausgeführt wird, die Zielbasisstation veranlassen, die Schritte eines der Ansprüche 1 bis 4 auszuführen.

9. Ein Programm, das Anweisungen umfasst, die, wenn das Programm von einem Prozessor einer Quellbasisstation ausgeführt wird, die Quellbasisstation veranlassen, die Schritte eines der Ansprüche 5 bis 7 auszuführen.

10. Eine Zielbasisstation, wobei die Zielbasisstation konfiguriert ist, das Verfahren gemäß einem der Ansprüche 1 bis 4 durchzuführen.

11. Eine Quellbasisstation, wobei die Quellbasisstation konfiguriert ist, das Verfahren gemäß einem der Ansprüche 5 bis 7 durchzuführen.

## Revendications

1. Un procédé de contrôle de transfert, comprenant :
réception (123), par une station de base cible, d'un message de demande de transfert provenant d'une station de base source, le message de demande de transfert comprenant une identité d'une station de base de petite cellule ou une identité de cellule de la station de base de petite cellule; et
transmettre (125), par la station de base cible, un message d'accusé de réception de transfert à la station de base source, le message d'accusé de réception de transfert comprenant une indication qui occupe un bit, une valeur de l'indication étant utilisée pour représenter que les données utilisateur d'un équipement utilisateur, UE, continuent d'être transmises par la station de base de petite cellule après que l'UE accède à la station de base cible, la station de base cible fournissant un service de plan de contrôle pour l'UE.

2. Le procédé selon la revendication 1, dans lequel, après la transmission (125) du message d'accusé de réception de transfert à la station de base source, le procédé comprend en outre :
transmettre à la station de base de petite cellule des informations pour arrêter la transmission de données vers l'UE.

3. Le procédé selon la revendication 1, dans lequel, après que l'UE accède (127) à la station de base cible, le procédé comprend en outre :
transmettre (128) au UE un message de réponse d'accès aléatoire; et
recevoir (129) de l'UE un message de transfert complet.

4. Le procédé selon la revendication 1, dans lequel, après que l'UE accède (127) à la station de base cible, le procédé comprend en outre :
transmettre à la station de base de petite cellule des informations pour continuer à transmettre des données à l'UE.

5. Un procédé de contrôle de transfert, comprenant : la transmission (123), par une station de base source, d'un message de demande de transfert à une station de base cible, le message de demande de transfert comprenant une identité d'une station de base de petite cellule ou une identité de cellule de la station de base de petite cellule ; et
réception (125), par la station de base source, d'un message d'accusé de réception de transfert de la station de base cible, le message d'accusé de réception de transfert comprenant une indication occupant un bit, une valeur de l'indication étant utilisée pour représenter que les données utilisateur d'un équipement utilisateur, UE, continuent d'être transmises par la station de base de petite cellule après que l'UE accède à la station de base cible, la station de base cible fournissant un service de plan de contrôle pour l'UE.

6. Le procédé selon la revendication 5, dans lequel, lors de la réception ou après la réception (125) du message d'accusé de réception de transfert transmis par la station de base cible, le procédé comprend en outre :
transmettre à la station de base de petite cellule des informations pour arrêter de transmettre des données à l'UE.

7. Le procédé selon la revendication 5, dans lequel, après que l'UE accède (127) à la station de base cible, le procédé comprend en outre :
transmettre à la station de base de petite cellule des informations pour continuer à transmettre des données à l'UE.

8. Un programme comprenant des instructions qui, lorsque le programme est exécuté par un processeur d'une station de base cible, amènent la station de base cible à effectuer les étapes de l'une quelconque des revendications 1 à 4.

9. Un programme comprenant des instructions qui, lorsque le programme est exécuté par un processeur d'une station de base source, amènent la station de base source à effectuer les étapes de l'une quelconque des revendications 5 à 7.

10. Une station de base cible, la station de base cible étant configurée pour exécuter le procédé selon l'une quelconque des revendications 1 à 4.

11. Une station de base source, la station de base source étant configurée pour exécuter le procédé selon l'une quelconque des revendications 5 à 7.
